# EUROPEAN PATENT APPLICATION

(11) **EP 3 385 610 A1**
(43) Date of publication of application: **10.10.2018**
(21) Application number: 18165536.6
(22) Date of filing: 03.04.2018
(51) Int. Cl.: F21V 5/04, B29D 11/00, F21W 131/406, F21Y 115/10, F21Y 115/15, F21Y 113/13

(54) **LENS PROTECTION FOR HIGH INTENSITY LUMINAIRES**

(30) Priority: 03.04.2017 US 201762480973 P
(71) Applicant: ROBE lighting s.r.o., 75661 Roznov pod Radhostem (CZ)
(72) Inventor: Jurik, Pavel, 756 56 Prostredni Becva (CZ); Valchar, Josef, 756 56 Prostredni Becva (CZ); Vilem, Jan, 755 01 Vsetin (CZ)
(74) Representative: Hanna Moore + Curley

(57) **Abstract**

A luminaire is provided that includes a light source comprising at least one light-emitting diode (LED) and a coated lens. The coated lens includes a lens comprising a plastic material and a coating configured to reduce a susceptibility of the lens to scratching, to reduce a buildup of static electricity on the surface of the lens, and to reduce cracking of the lens coating from thermal cycling of the lens.

## Description

### CROSS-REFERENCE TO RELATED APPLICATIONS

This application claims priority to U.S. Provisional Application No. 62/480,973 filed April 3, 2017, by Pavel Juřík, et al., entitled, "Lens Coatings for Luminaires", which is incorporated by reference herein as if reproduced in its entirety.

### TECHNICAL FIELD

The present disclosure relates generally to coatings that may be applied to lenses of entertainment lighting fixtures, and specifically to coatings to reduce buildup of aerosol particles and scratches.

### BACKGROUND

Luminaires with automated and remotely controllable functionality are well known in the entertainment and architectural lighting markets. Such products are commonly used in theatres, television studios, concerts, theme parks, night clubs and other venues. A typical product will provide control over functions of a luminaire allowing the operator to remotely control intensity and color of a light beam from the luminaire that is shining on the stage or in the studio. Some products also provide control over other parameters such as the position, focus, beam size, beam shape and beam pattern.

### SUMMARY

In one embodiment, a coated lens for use in a high intensity entertainment luminaire includes a lens comprising a plastic material, and a coating configured to reduce a susceptibility of the lens to scratching, to reduce a buildup of static electricity on the surface of the lens, and to reduce cracking of the lens coating from thermal cycling of the lens.

In another embodiment, a luminaire includes a light source comprising at least one light-emitting diode (LED) and a coated lens. The coated lens includes a lens comprising a plastic material and a coating configured to reduce a susceptibility of the lens to scratching, to reduce a buildup of static electricity on the surface of the lens, and to reduce cracking of the lens coating from thermal cycling of the lens.

### BRIEF DESCRIPTION OF THE DRAWINGS

For a more complete understanding of this disclosure, reference is now made to the following brief description, taken in conjunction with the accompanying drawings in which like reference numerals indicate like features.
FIGURE 1 illustrates a multi-parameter automated luminaire lighting system.
FIGURE 2 illustrates a first automated luminaire that includes multiple lenses.
FIGURE 3 illustrates a lens assembly of a second automated luminaire.
FIGURE 4 presents a first example of an uncoated lens and a lens coated according to the disclosure, after use.
FIGURE 5 presents a second example of an uncoated lens and a lens coated according to the disclosure, after use.

### DETAILED DESCRIPTION

Preferred embodiments of the disclosure are illustrated in the figures, like numerals being used to refer to like and corresponding parts of the various drawings.

The disclosure generally relates to improving the coating of lenses in entertainment luminaires to protect them from scratching and the buildup of moisture and static.

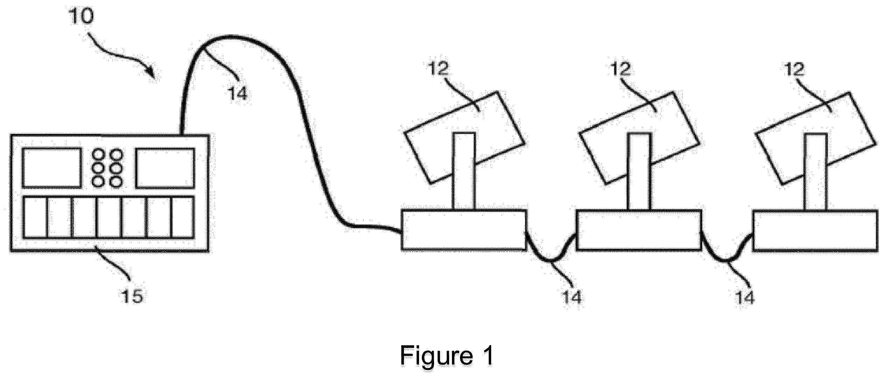

FIGURE 1 illustrates a multi-parameter automated luminaire lighting system 10. Lighting system 10 includes a plurality of multi parameter automated luminaires 12, which each includes a light source, light modulation devices, electric motors coupled to mechanical drives systems, and control electronics. In addition to being connected to a power source either directly or through a power distribution system, each luminaire 12 is connected in series or in parallel via data link 14 to one or more control desks (or consoles) 15. The lighting system 10 is configured to be controlled by an operator using the control desk 15.

Lenses on the luminaires 12 may be manufactured from plastic materials, such as polycarbonates, acrylics, or PMMA (polymethylmethacrylate). Such materials possess excellent optical properties, good optical clarity and color, and are generally inexpensive and lightweight. However, such materials are easier to scratch than a comparable glass lens. They may also accumulate static, thereby attracting dust and moisture droplets from the air. In an entertainment environment, theatrical fog and haze is used to enhance light beam effects. Theatrical fog and haze frequently are comprised of fine droplets in the air of water combined with a glycol, to inhibit rapid evaporation. Such aerosol droplets, as well as dust, may be attracted to a statically charged surface and be deposited thereon.

Some lens coatings intended to prevent these problems don't perform satisfactorily in the atmosphere of a theatrical environment or with high intensity (or high power) entertainment luminaires. In some embodiments, a high intensity luminaire according to the disclosure includes a light source comprising one or more light-emitting diodes (LEDs) with power consumption greater than 10 watts. In a preferred embodiment, a light source according to the disclosure comprises at least one LED with power consumption of 30 watts. Such LEDs may comprise so-called organic LEDs or conventional LEDs. In some embodiments, the light source includes a plurality of LEDs, each emitting light of a different color (in a non-limiting example, red, green, blue, and white LEDs).

In some cases, lens coatings crack from their temperature cycling up and down due to the high power LEDs. As a fixture is used, its lens temperature rises and the lens expands, followed by the lens cooling and contracting. This cycle of expanding and contracting typically occurs multiple times during a performance or over a series of performances. If there is a difference in thermal expansion between the lens material and the coating, a stress develops along the interface between the lens and the coating, with the possible result that the coating may crack and/or separate from the lens.

Additionally, entertainment luminaires are often handled roughly, taken in and out of road cases, hung and moved around on a truss or in a theatre or other venue. As a result, coatings on exposed lenses of an entertainment luminaire may be subject to impact and/or sliding, abrasive contact.

Lens coatings according to the disclosure are configured to reduce a plastic lens' susceptibility to scratching, to reduce the buildup of static electricity on a surface of the lens, and to reduce cracking of the lens coating from thermal cycling of the lens.

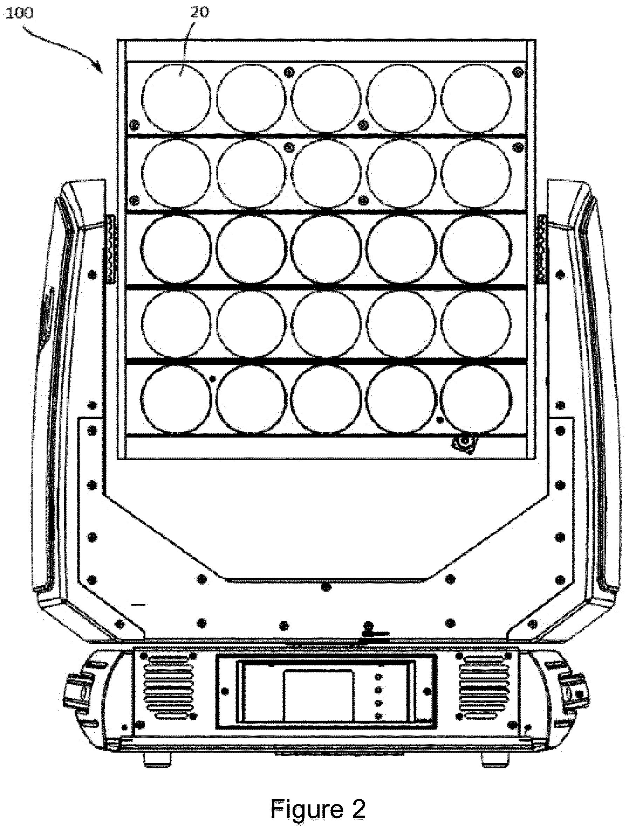

FIGURE 2 illustrates a first automated luminaire 100 that includes multiple lenses 20. In order to reduce weight and cost, the lenses 20 may be manufactured from a polymer such as PMMA or polycarbonate. The lenses are exposed and subject to scratching, as well as the deposition of dust or moisture.

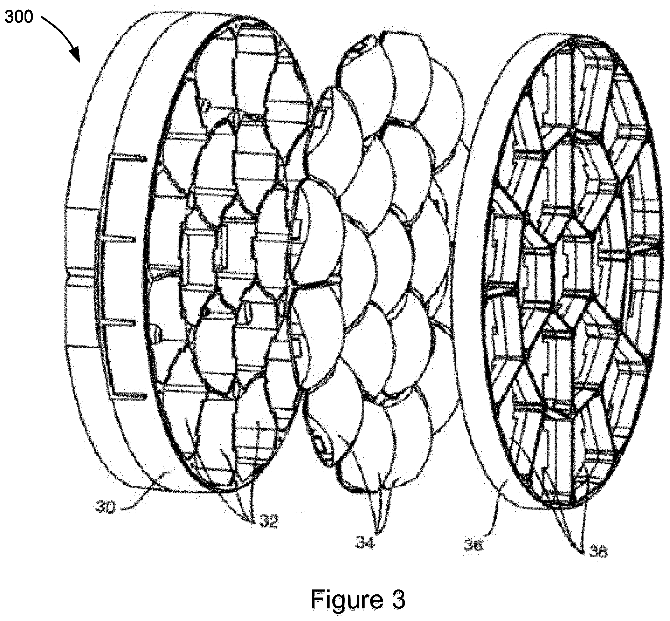

FIGURE 3 illustrates a lens assembly 300 of a second automated luminaire. A lens carrier 30 includes apertures 32, into which lenses 34 are received. A frontpiece 36 fits over the lenses 34 and attaches to the lens carrier 30, capturing the lenses 34 in the lens assembly 300. Front sides of the lenses 34 are exposed in apertures 38 of the frontpiece 36 and are subject to scratching, as well as the deposition of dust or moisture.

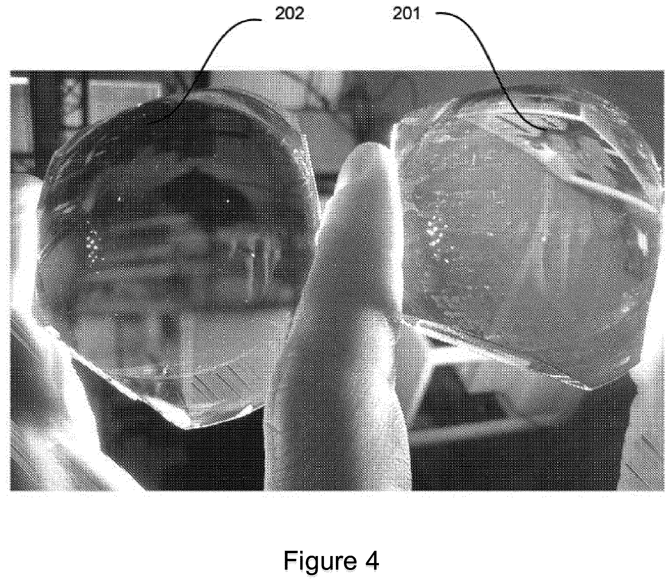

FIGURE 4 presents a first example of an uncoated lens 201 and a lens 202 coated according to the disclosure, after use. Coated lens 202 remains clean and clear while uncoated lens 201 shows marks from moisture and dust.

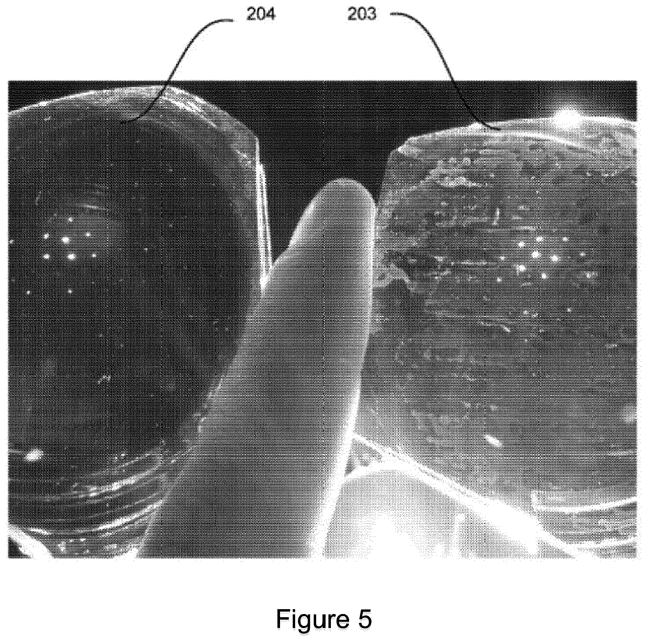

FIGURE 5 presents a second example of an uncoated lens 203 and a lens 204 coated according to the disclosure, after use. Again, coated lens 204 remains clean and clear while uncoated lens 203 shows marks from moisture and dust.

Some coatings applied to entertainment luminaire lenses may be clear coat materials, such as those used in the automotive industry for protecting and weatherizing headlights. However, readily available coatings do not provide protection from all the problems described above.

Such coatings are typically available in at least two separate formulations: coatings for providing a finish that is resistant to scratching, known as anti-scratch coatings; and coatings designed to provide reduction in static on a lens surface, known as antistatic coatings. Embodiments of the disclosure use a mixture of these two types of coatings in a manner that is not described or suggested by the manufacturers, in order to produce a combination of characteristics that is suitable for use on entertainment luminaire lenses. Coatings according to the disclosure balance several parameters: adhesion, hardness/scratch resistance, antistatic properties, and physical properties of the material, such as thermal coefficient of expansion and a method of coating.

For example, the UVHC3000 coating, available from Momentive Performance Materials Inc. of Waterford, New York, is designed for front headlights on cars. It is a clear, solvent-based, UV radiation cured coating which provides protection against abrasion, chemical damage, degradation caused by ultraviolet radiation and weathering. However, it has poor antistatic properties.

Other coatings that are applied by spraying and UV-curing have good antistatic properties but are soft and easy to scratch. Still further coatings may fail in the application due to a mismatch of thermal expansion between the coating and the substrate. Such problems are often exacerbated by attempting to mix coating materials together.

Further, adding an antistatic coating to an anti-scratch coating typically results in a coating material that imparts a haze or translucency to the coated surface. Such a result is clearly unacceptable in a coating for lenses in entertainment luminaires. Antistatic coatings are also hygroscopic which makes their storage, mixing, and application much more difficult than an anti-scratch coating alone. Mixtures of the two materials are not commercially available for these reasons, and the use of one often precludes the use of the other.

In some embodiments the mixture of coating materials is applied to lenses via a dipping process. The orientation of the lens while dipping is controlled such that no drips or runs appear on the lens surface. In a preferred embodiment, a plano-convex lens is dipped with its convex side uppermost.

In some embodiments the percentage of anti-static coating is at a level of less than 3%. In a preferred embodiment an acceptable combination of anti-static properties without visible haze is achieved with an anti-static concentration below 1%.

In some embodiments the materials that may be combined and used for coating include, but are not limited to, Shyre Shield 1.5 anti-scratch coating and Shyre AFC anti-static coating (both available from Shyre Ltd, Shrewsbury, UK); SCL Varnish 145-41-NT anti-scratch coating (available from SCL International, Archamps, France); Momentive SilFort PHC XH100P and Momentive UVHC3000 anti-scratch coatings; and Vuegard 802 AS anti-scratch coating (available from Performance Coatings International Laboratories LLC, Bangor, Pa.).

Several test methods can be used for investigating the quality of the coating. For example, the Bayer test for measuring scratch resistance, a cross-cut test for measuring adhesion, a contact angle measurement test for measuring surface energy and antistatic properties.

While the disclosure has been described with respect to a limited number of embodiments, those skilled in the art, having benefit of this disclosure, will appreciate that other embodiments may be devised which do not depart from the scope of the disclosure herein. The disclosure has been described in detail, it should be understood that various changes, substitutions and alterations can be made hereto without departing from the spirit and scope of the disclosure.

## Claims

1. A coated lens for use in a high intensity entertainment luminaire, the lens comprising:
a lens comprising a plastic material; and
a coating configured to reduce a susceptibility of the lens to scratching, to reduce a buildup of static electricity on the surface of the lens, and to reduce cracking of the lens coating from thermal cycling of the lens.

2. The coated lens of claim 1, wherein the coating comprises an anti-scratch compound and less than 3% of an anti-static compound.

3. The coated lens of claim 2, wherein the coating comprises less than 1% of the anti-static compound.

4. The coated lens of claim 1, wherein the plastic material comprises one of a polycarbonate, an acrylic, or polymethylmethacrylate.

5. A luminaire, comprising:
a light source comprising at least one light-emitting diode (LED); and
a coated lens, comprising:
a lens comprising a plastic material; and
a coating configured to reduce a susceptibility of the lens to scratching, to reduce a buildup of static electricity on the surface of the lens, and to reduce cracking of the lens coating from thermal cycling of the lens.

6. The luminaire of claim 5, wherein the coating comprises an anti-scratch compound and less than 3% of an anti-static compound.

7. The luminaire of claim 6, wherein the coating comprises less than 1% of the anti-static compound.

8. The luminaire of claim 5, wherein the plastic material comprises one of a polycarbonate, an acrylic, or polymethylmethacrylate.

9. The luminaire of claim 5, wherein the at least one LED has a power consumption greater than 10 watts.

10. The luminaire of claim 5, wherein the at least one LED has a power consumption of 30 watts.

11. The luminaire of claim 5, comprising a plurality of LEDs, each emitting light of a different color.

12. The luminaire of claim 5, wherein the at least one LED is an organic LED.
